# EUROPEAN PATENT APPLICATION

(11) **EP 4 718 054 A1**
(43) Date of publication of application: **01.04.2026**
(21) Application number: 24830817.3
(22) Date of filing: 26.06.2024
(51) Int. Cl.: G01N 1/31, G01N 35/04, G01N 35/10, G01N 33/53, A61G 12/00

(54) **FULLY AUTOMATED IMMUNOHISTOCHEMICAL STAINER, ARC DOOR STRUCTURE AND MEDICAL LABORATORY DEVICE**

(30) Priority: 30.06.2023 CN 202310799469; 27.03.2024 CN 202420620263 U
(71) Applicant: Dakewe (Shenzhen) Medical Equipment Co., Ltd., Shenzhen, Guangdong 518000 (CN)
(72) Inventor: CHEN, Guansheng, Shenzhen, Guangdong 518000 (CN); YU, Mujiu, Shenzhen, Guangdong 518000 (CN); YIN, Kai, Shenzhen, Guangdong 518000 (CN); ZOU, Hao, Shenzhen, Guangdong 518000 (CN); ZHOU, Xiongbing, Shenzhen, Guangdong 518000 (CN); TANG, Yuhao, Shenzhen, Guangdong 518000 (CN); HE, Junfeng, Shenzhen, Guangdong 518000 (CN)
(74) Representative: Arsuaga Santos, Elisa
(86) International application number: PCT/CN2024/101637
(87) International publication number: WO 2025/002180

(57) **Abstract**

The present application relates to a fully automated immunohistochemical stainer, an arc door structure and a medical laboratory device. The fully automated immunohistochemical stainer comprises a workbench, a first mechanical arm assembly, a second mechanical arm assembly, incubation module assemblies, a small-capacity reagent storage assembly, a reagent switching and addition assembly and a large-capacity reagent storage assembly. The first mechanical arm assembly and the second mechanical arm assembly can drive sample dispensing probes and spray assemblies to ascend and descend independently, implementing fully automated sample dispensing operation. The two mechanical arm assemblies can perform sample dispensing operation on the plurality of incubation module assemblies at the same time, shortening the overall staining time and improving staining efficiency. The functional assemblies are stacked into a layout, with a compact structure and a small footprint. The arc door structure provided in the embodiments of the present application is easy to operate and occupies little space.

## Description

### CROSS-REFERENCE TO RELATED APPLICATIONS

This application is a national stage filing under 35 U.S.C. § 371 of international application number PCT/CN2024/101637, filed June 26, 2025, which claims priority to Chinese patent application No. 2023107994695 filed June 30, 2023 and to Chinese patent application No. 2024206202631 filed March27, 2024. The contents of these applications are incorporated herein by reference in their entirety.

### TECHNICAL FIELD

The present disclosure relates to the technical field of medical equipment, and in particular, to a fully automated immunohistochemical stainer, an arc door structure, and a medical laboratory device.

### BACKGROUND

Related fully automated immunohistochemical stainers utilize a robotic arm to automatically add reagents, thereby achieving automation of immunohistochemical staining. However, the staining efficiency of such related fully automated immunohistochemical stainers is not high enough, which poses challenges in meeting the growing testing demands in clinical laboratories.

### SUMMARY

In order to improve the technical problem that the staining efficiency of existing fully automated immunohistochemical stainers is increasingly unable to meet demand, the present disclosure provides a fully automated immunohistochemical stainer, an arc door structure, and a medical laboratory device.

The technical solutions provided in the present disclosure are as follows:
In accordance with a first aspect of the present disclosure, an embodiment provides a fully automated immunohistochemical stainer, including a workbench, a first robotic arm assembly, a second robotic arm assembly, a plurality of incubation module assemblies, a small-capacity reagent storage assembly, a reagent switching and addition assembly, a cleaning agent supply assembly, and a large-capacity reagent storage assembly, where the plurality of incubation module assemblies are arranged in parallel arrays on the workbench, the small-capacity reagent storage assembly is arranged in the middle of the plurality of incubation module assemblies, the reagent switching and addition assembly, the cleaning agent supply assembly, and the large-capacity reagent storage assembly are arranged below the workbench; each of the first and second robotic arm assemblies includes an X-axis motion module, a Y-axis motion module, a first Z-axis lifting module, and a second Z-axis lifting module, the first and second Z-axis lifting modules are arranged on a Y-axis slider of the Y-axis motion module, the first Z-axis lifting module is provided with a sample injection needle, the second Z-axis lifting module is provided with a spray assembly, the sample injection needle and the large-capacity reagent storage assembly both are connected to the reagent switching and addition assembly, the reagent switching and addition assembly is used to draw a reagent from the large-capacity reagent storage assembly and discharge a sample from the sample injection needle, the reagent switching and addition assembly is also used to draw a reagent from the small-capacity reagent storage assembly via the sample injection needle and then dispense a sample from the sample injection needle; the spray assembly and the large-capacity reagent storage assembly are both connected to the cleaning agent supply assembly, the cleaning agent supply assembly is used to draw a cleaning agent from the large-capacity reagent storage assembly and spray the cleaning agent from the spray assembly; the first and second robotic arm assemblies are configured to move the sample injection needle to add a reagent to the incubation module assemblies and draw a reagent from the small-capacity reagent storage assembly; the first and second robotic arm assemblies are also configured to move the spray assembly to spray the incubation module assemblies.

By adopting the above technical solution, the small-capacity reagent storage assembly of the present disclosure is mainly used to accommodate staining reagents that are used in lower volumes; the large-capacity reagent storage assembly is mainly used to accommodate buffering agents and cleaning agents that are used in higher volumes, or to store waste liquid; the reagent switching and addition assembly can directly draw a reagent from the large-capacity reagent storage assembly and distribute it to the sample injection needle, and can also draw a reagent from the small-capacity reagent storage assembly through the sample injection needle, and then inject samples to the incubation module assemblies; the cleaning agent supply assembly draws a cleaning agent from the large-capacity reagent storage assembly and sprays it out from the spray assembly for cleaning; each of the first and second robotic arm assemblies is provided with a first Z-axis lifting module and a second Z-axis lifting module, which can drive the sample injection needle and the spray assembly to rise and fall independently, thereby achieving fully automated sample loading and cleaning operations. The present disclosure utilizes two sets of robotic arm assemblies that can simultaneously perform sample loading and spray operations on the plurality of incubation module assemblies, shortening the overall staining time and improving the staining efficiency. The spray assembly provided can continuously or intermittently spray a reagent reaction zone on a slide, effectively preventing insufficient cleaning intensity during reagent capillary replacement, achieving better cleaning effects and improving staining quality. Intermittent spraying can minimize reagent consumption while ensuring effective cleaning. The stacked layout of the functional components results in a compact structure and a small footprint.

In an embodiment, the X-axis motion module includes an X-axis guide rail. The first and second robotic arm assemblies are spaced apart in an X-axis direction and share the same X-axis guide rail. The first robotic arm assembly is configured to perform sample loading and cleaning operations on the incubation module assemblies located on one side of the small-capacity reagent storage assembly in the X-axis direction, while the second robotic arm assembly is configured to perform sample loading and cleaning operations on the incubation module assemblies located on the other side of the small-capacity reagent storage assembly in the X-axis direction.

By adopting the above technical solution and reasonably staggering the use of the intermediate small-capacity reagent storage assembly through a scheduling control program, sample loading and spraying operations can be performed simultaneously on the plurality of incubation module assemblies, shortening the overall staining time and improving the staining efficiency.

In an embodiment, two sets of incubation module assemblies are provided on each side of the small-capacity reagent storage assembly.

By adopting the above technical solution, four sets of incubation module assemblies are provided, providing a large detection capacity.

In an embodiment, the first Z-axis lifting module includes a first lifting rod, a first drive motor, and a spline shaft. The first lifting rod is vertically slidably mounted on a Y-axis slider of the Y-axis motion module. The spline shaft is parallel to the Y-axis. The side walls of the first lifting rod are provided with rack teeth that engage with the spline shaft. The first drive motor is mounted on an X-axis slider of the X-axis motion module and is configured to rotate the spline shaft, which in turn drives the first lifting rod up and down. The sample injection needle is arranged at a lower end of the first lifting rod. The first lifting rod is a hollow rod with a first liquid tube inside. The sample injection needle is connected to the reagent switching and addition assembly via the first liquid tube.

By adopting the above technical solution, since the first drive motor has a relatively large volume, after placing it on the X-axis slider, the Y-axis motion module can be designed to be thinner. This further reduces the width of the fully automated immunohistochemical stainer, resulting in a more compact footprint, a smaller space occupation, and easier placement within a detection chamber.

In an embodiment, the second Z-axis lifting module includes a second lifting rod, a second drive motor, and a screw transmission assembly. The second lifting rod is vertically slidably mounted on the Y-axis slider of the Y-axis motion module. The second drive motor and the screw transmission assembly are both mounted on a mounting bracket of the Y-axis motion module. The second drive motor drives the second lifting rod up and down via the screw transmission assembly. The spray assembly is arranged at a lower end of the second lifting rod. The second lifting rod is a hollow rod with a second liquid tube inside. The spray assembly is connected to the reagent switching and addition assembly via the second liquid tube.

By adopting the above technical solution, due to the limited space above the X-axis slider, which makes it difficult to accommodate two drive motors, the present disclosure adopts a conventional lifting solution, placing the second drive motor and screw transmission assembly on the Y-axis slider.

In an embodiment, the incubation module assembly includes a slide tray, a heating block, a manifold, a gas-liquid separator assembly, and a liquid collection funnel. The slide tray is placed above the heating block so that a lower surface of the slide tray is in direct contact with the heating block. The manifold is located below the slide tray and is used to receive waste liquid. A negative pressure drainage port is provided at a lower end of the manifold. The gas-liquid separator assembly is connected to an external negative pressure source. An upper end of the gas-liquid separator assembly is connected to the negative pressure drainage port of the manifold, and a lower end of the gas-liquid separator assembly is connected to the liquid collection funnel. A lower end of the liquid collection funnel is connected to a waste liquid bottle.

By adopting the above technical solution, when the slide tray is correspondingly placed in one of the incubation module assemblies, the heating block can heat the slides as needed to maintain the required temperature during the staining step. After the reaction is completed, the manifold can collect waste liquid generated, which flows through the negative pressure drainage port into the gas-liquid separator assembly for gas-liquid separation. The waste liquid then flows into the liquid collection funnel and ultimately into the waste liquid bottle.

In an embodiment, the sample injection needle is provided with a liquid level sensor. The liquid level sensor is configured to detect the liquid level in a corresponding reagent bottle within the small-capacity reagent storage assembly as the sample injection needle draws a reagent from the small-capacity reagent storage assembly. The first Z-axis lifting module is configured to continue moving the sample injection needle downward a certain distance when the sample injection needle contacts the liquid surface, thereby immersing the sample injection needle below the liquid surface.

By adopting the above technical solution, the liquid level sensor can ensure that the sample injection needle draws the reagent, and can also minimize the amount of residual reagent in the small-capacity reagent storage assembly, reducing waste.

In an embodiment, the workbench is also provided with a cleaning reservoir. The sample injection needle or spray assembly is further configured to add a cleaning agent into the cleaning reservoir. A liquid extraction port is provided at a bottom of the cleaning reservoir. Waste liquid in the cleaning reservoir is pumped into the waste liquid bottle by a liquid extraction component. The sample injection needle extends into the cleaning reservoir to clean residual liquid on the inner and outer walls thereof.

By adopting the above technical solution, the primary purpose of providing a cleaning reservoir is to clean residual liquid on the inner and outer walls of the sample injection needle, preventing cross-contamination between reagents within the sample injection needle.

In an embodiment, a mixing station is also provided adjacent to the cleaning reservoir. The sample injection needle is further configured to draw multiple reagents from the small-capacity reagent storage assembly into the mixing station for mixing, and then add the mixed solution to the incubation module assembly.

By adopting the above technical solution, some reagents with mixed ingredients cannot be stored for a long time and must be prepared freshly when used. The present disclosure provides a mixing station, and multiple reagents can be added to the mixing station. The sample injection needle can aspirate or agitate multiple times to achieve a uniform mixing effect, which solves the defect that conventional equipment cannot automatically add some mixed reagents.

In an embodiment, the cleaning reservoir is also provided with a negative pressure drainage suction level, configured to remove residual liquid from a bottom of the spray assembly.

By adopting the above technical solution, residual liquid at the bottom of the spray assembly is prevented from dripping onto the incubation module assembly during movement.

In accordance with a second aspect of the present disclosure, an embodiment provides a fully automated immunohistochemical stainer, including a workbench, a first robotic arm assembly, a second robotic arm assembly, a plurality of incubation module assemblies, a small-capacity reagent storage assembly, a reagent switching and addition assembly, and a large-capacity reagent storage assembly. The plurality of incubation module assemblies are disposed on the workbench, the small-capacity reagent storage assembly is disposed between the plurality of incubation module assemblies. A sample injection needle is disposed on each of the first and second robotic arm assemblies, the sample injection needle and the large-capacity reagent storage assembly are both connected to the reagent switching and addition assembly. The reagent switching and addition assembly is configured to draw a reagent from the large-capacity reagent storage assembly and dispense a sample through the sample injection needle. The first and second robotic arm assemblies are configured to move the sample injection needle to add a reagent to the incubation module assembly and to draw a reagent from the small-capacity reagent storage assembly.

In accordance with a third aspect of the present disclosure, an embodiment provides an arc door structure, including:
a support frame provided with an operating window and configured to be arranged above an operating space of a working device, where the support frame is provided with a guide structure; and
an arc door provided with a limiting structure that cooperates with the guide structure and having an upward and downward sliding travel along the guide structure, where the arc door opens the operating window when it is in an upper position, and the arc door sealably covers the operating window when it is in a lower position.

In accordance with a fourth aspect of the present disclosure, an embodiment provides a medical laboratory device including the arc door structure of the third aspect described above and a working device, where the arc door structure is mounted on the working device.

The present disclosure provides at least one of the following advantageous technical effects.

Each of the first and second robotic arm assemblies in the fully automated immunohistochemical stainer of the present disclosure can drive the sample injection needle to move independently, achieving fully automated sample loading, and can simultaneously perform sample loading on a plurality of incubation module assemblies, shortening the overall staining time and improving the staining efficiency.

### BRIEF DESCRIPTION OF DRAWINGS

FIG. 1 illustrates a perspective view of a fully automated immunohistochemical stainer according to an embodiment of the present disclosure;
FIG. 2 illustrates a perspective view of first and second robotic arm assemblies according to an embodiment of the present disclosure;
FIG. 3 illustrates a perspective view of a first robotic arm assembly according to an embodiment of the present disclosure;
FIG. 4 illustrates a perspective view of a first robotic arm assembly from another angle according to an embodiment of the present disclosure;
FIG. 5 illustrates a perspective view of incubation module assemblies according to an embodiment of the present disclosure;
FIG. 6 illustrates a perspective view of incubation module assemblies from another angle according to an embodiment of the present disclosure;
FIG. 7 illustrates a perspective view of a manifold according to an embodiment of the present disclosure;
FIG. 8 illustrates a perspective view of a cleaning reservoir according to an embodiment of the present disclosure;
FIG. 9 is a schematic perspective view of an arc rotating door structure according to an embodiment of the present disclosure;
FIG. 10 is a partially enlarged schematic diagram of section A in FIG. 9;
FIG. 11 is a partially enlarged schematic diagram of section B in FIG. 9;
FIG. 12 is a schematic exploded view of a guide assembly according to an embodiment of the present disclosure;
FIG. 13 is a cross-sectional schematic diagram of a guide wheel according to an embodiment of the present disclosure;
FIG. 14 is a cross-sectional schematic diagram of an arc rotating door structure according to an embodiment of the present disclosure;
FIG. 15 is a partially enlarged schematic diagram of section C in FIG. 14;
FIG. 16 is a schematic diagram of an arc door structure used in a fully automated immunohistochemical stainer according to an embodiment of the present disclosure.

Reference numerals:
1. workbench; 2. first robotic arm assembly; 21. X-axis motion module; 211. X-axis guide rail; 212. X-axis slider; 22. Y-axis motion module; 221. Y -axis slider; 23. first Z-axis lifting module; 231. first lifting rod; 2311. rack teeth; 232. first drive motor; 233. spline shaft; 234. first liquid tube; 24. second Z -axis lifting module; 241. second lifting rod; 242. second liquid tube; 3. second robotic arm assembly; 4. incubation module assembly; 41. slide tray; 42. heating block; 43. manifold; 431. negative pressure drainage port; 44. gas-liquid separator assembly; 45. liquid collection funnel; 5. small-capacity reagent storage assembly; 6. reagent switching and addition assembly; 7. large-capacity reagent storage assembly; 8. sample injection needle; 9. spray assembly; 10. cleaning reservoir; 101. liquid extraction port; 102. negative pressure drainage suction level; 11. cleaning agent supply assembly; 12. mixing station; 13. cleaning tank;
01. support frame; 011. operating window; 012. support plate; 013. U-shaped rod; 02. arc door; 03. guide structure; 031. guide wheel; 0311. rotating shaft; 0312. upper roller; 0313. lower roller; 0314. rolling bearing; 032. arc groove; 033. fixed seat; 0331. mounting hole; 034. gear; 04. limiting structure; 041. curved guide rail; 042. connection plate; 0421. insertion hole; 043. rack; 05. assisting member; 051. traction cable; 0511. first traction cable; 0512. second traction cable; 052. first resilient element; 053. pulley assembly; 0531. fixed pulley; 0532. movable pulley; 06. buffer member; 061. mounting seat; 062. second resilient element; 063. buffer column; 07. push handle; 08. display screen; 09. cable carrier; 010. working device; 020. operating platform; 030. operating space; 040. supporting piece; 050. limiting sleeve; 060. limiting column.

### DETAILED DESCRIPTION

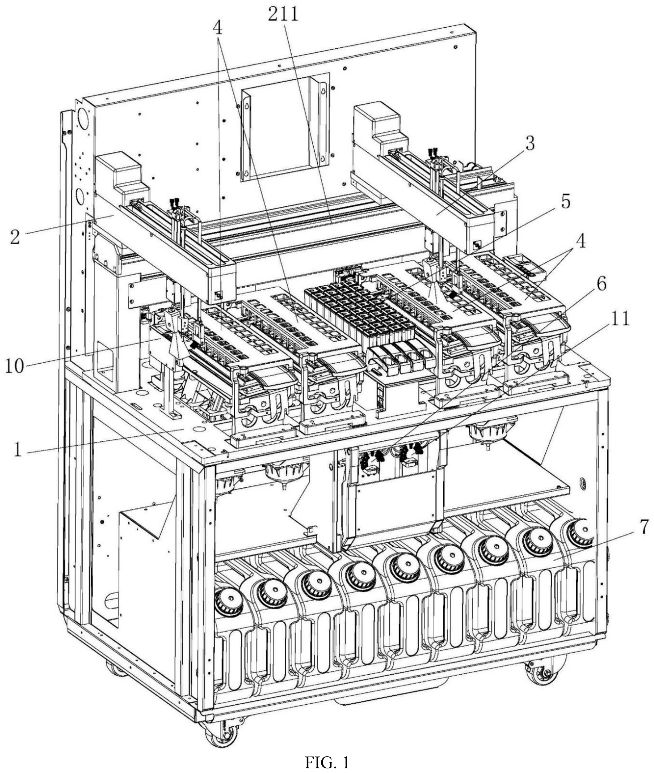

The following describes the present disclosure in further detail with reference to FIGS. 1 to 8.

Referring to FIG. 1, an embodiment of the present disclosure discloses a fully automated immunohistochemical stainer, including a workbench 1, a first robotic arm assembly 2, a second robotic arm assembly 3, a plurality of incubation module assemblies 4, a small-capacity reagent storage assembly 5, a reagent switching and addition assembly 6, and a large-capacity reagent storage assembly 7. The plurality of incubation module assemblies 4 are disposed on the workbench 1. In an embodiment, the plurality of incubation module assemblies 4 are arranged in parallel arrays on the workbench 1. The small-capacity reagent storage assembly 5 is disposed between the plurality of incubation module assemblies 4. For instance, a plurality of incubation module assemblies 4 are arranged on both sides of the small-capacity reagent storage assembly 5 along an X-axis direction (i.e., the left and right sides in FIG. 1). In an embodiment, the reagent switching and addition assembly 6 and the large-capacity reagent storage assembly 7 are arranged below the workbench 1. In an embodiment, the large-capacity reagent storage assembly 7 includes multiple barrels, which can store different reagents respectively, such as buffering agents and cleaning agents. In an embodiment, some of the barrels can also be used to store waste liquid.

In an embodiment, the first and second robotic arm assemblies 2 and 3 have the same structure. In this embodiment, the first robotic arm assembly 2 includes an X-axis motion module 21, a Y-axis motion module 22, a first Z-axis lifting module 23 and a second Z-axis lifting module 24. The first Z-axis lifting module 23 and the second Z-axis lifting module 24 are arranged on a Y-axis slider 221 of the Y-axis motion module 22. The first Z-axis lifting module 23 is provided with a sample injection needle 8. The sample injection needle 8 and the large-capacity reagent storage assembly 7 are both connected to the reagent switching and addition assembly 6. The reagent switching and addition assembly 6 is configured to draw a reagent from the large-capacity reagent storage assembly 7 and dispense a sample from the sample injection needle 8. The reagent switching and addition assembly 6 is also configured to draw a reagent from the small-capacity reagent storage assembly 5 through the sample injection needle 8 and then dispense a sample from the sample injection needle 8. The first and second robotic arm assemblies 2 and 3 are configured to move a sample injection needle 8 to add a reagent to the incubation module assembly 4 and to draw a reagent from the small-capacity reagent storage assembly 5.

In an embodiment, each of the first and second robotic arm assemblies 2 and 3 is provided with a spray assembly 9. In an embodiment, the spray assembly 9 is provided on the second Z-axis lifting module 24. In an embodiment, the fully automated immunohistochemical stainer further includes a cleaning agent supply assembly 11. The spray assembly 9 and the large-capacity reagent storage assembly 7 are both connected to the cleaning agent supply assembly 11. The cleaning agent supply assembly 11 is configured to draw a cleaning agent from the large-capacity reagent storage assembly 7 and spray it from the spray assembly 9. The first and second robotic arm assemblies 2 and 3 are configured to move the sample injection needle 8 to add a reagent to the incubation module assembly 4 and draw a reagent from the small-capacity reagent storage assembly 5. The first and second robotic arm assemblies 2 and 3 are further configured to move the spray assembly 9 to spray the incubation module assembly 4. For spray cleaning to achieve a desired jetting effect, a higher injection pressure is necessary. Therefore, this embodiment provides a separate cleaning agent supply assembly 11 and a separate liquid path to supply the cleaning agent required for spraying. In an embodiment, the cleaning agent supply assembly 11 can first draw the cleaning agent from the large-capacity reagent storage assembly 7 into a transfer bottle (not shown), and then into the spray assembly 9. In an embodiment, the sample injection needles 8 on the first and second robotic arm assemblies 2 and 3 share a pumping and drainage system, with two valves at the end of the transfer bottle splitting into two paths for spraying.

The spray assembly 9 in the embodiment of the present disclosure can spray a reagent reaction zone continuously or intermittently, preventing insufficient cleaning intensity during reagent capillary replacement, achieving better cleaning effects and improving staining quality. And using the jet generated by intermittent spraying can ensure the cleaning effect while minimizing the reagent consumption.

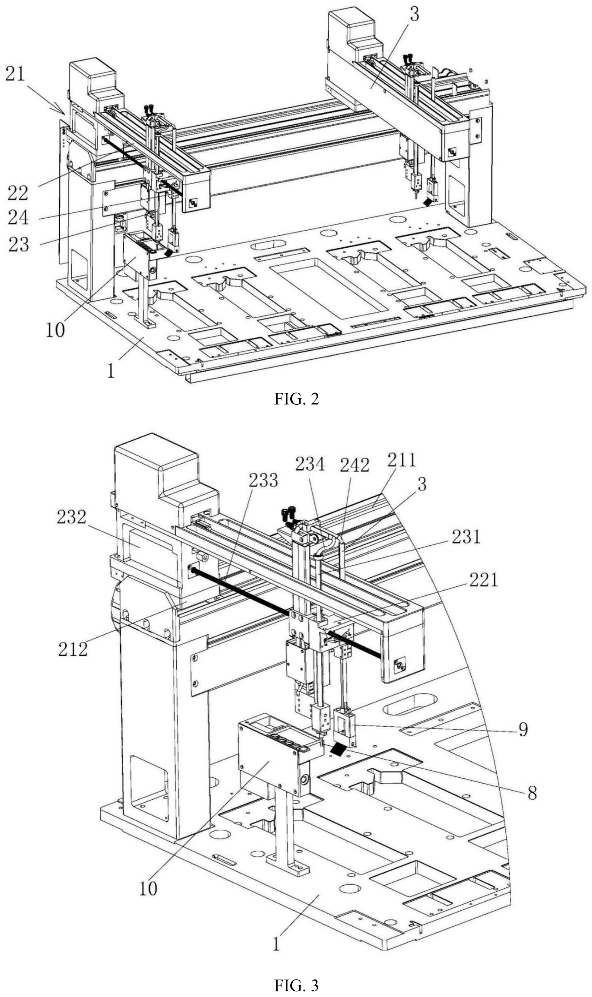

Referring to FIGS. 1 and 2, the first and second robotic arm assemblies 2 and 3 are positioned on the workbench 1 and spaced apart in the X-axis direction, that is, arranged on the left and right sides of the workbench 1, respectively. In this embodiment, the first and second robotic arm assemblies 2 and 3 share an X-axis guide rail 211. The first robotic arm assembly 2 is configured to perform sample loading and cleaning operations on the incubation module assembly 4 on one side (left side in the figures) of the small-capacity reagent storage assembly 5 in the X-axis direction, while the second robotic arm assembly 3 is configured to perform sample loading and cleaning operations on the incubation module assembly 4 on the other side (right side in the figures) of the small-capacity reagent storage assembly 5 in the X-axis direction. The small-capacity reagent storage assembly 5 has two sets of incubation module assemblies 4 on each of its two opposite sides in the X-axis direction, for a total of four sets, enabling a large detection capacity. By reasonably staggering the use of the intermediate small-capacity reagent storage assembly 5 through a scheduling control program, sample loading and spraying operations can be performed simultaneously on the plurality of incubation module assemblies 4, shortening the overall staining time and improving the staining efficiency.

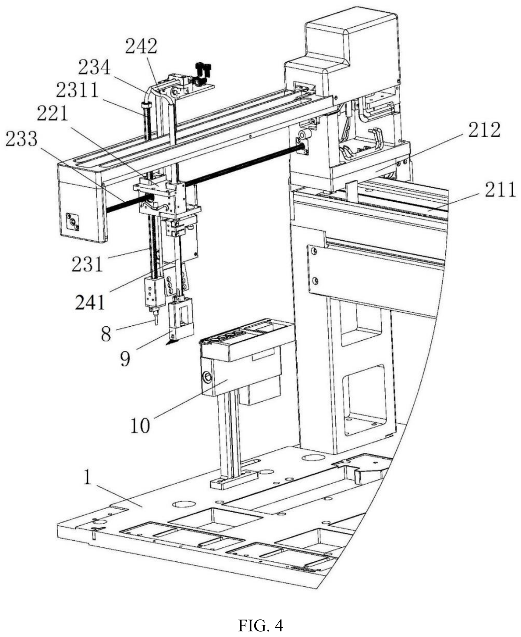

Referring to FIGS. 3 and 4, the first Z-axis lifting module 23 includes a first lifting rod 231, a first drive motor 232, and a spline shaft 233. The first lifting rod 231 is vertically slidably mounted on a Y-axis slider 221 of the Y-axis motion module 22. The spline shaft 233 is parallel to a Y-direction. A side wall of the first lifting rod 231 is provided with rack teeth 2311 that mesh with the spline shaft 233. The first drive motor 232 is provided on an X-axis slider 212 of the X-axis motion module 21 and is configured to drive the spline shaft 233 to rotate. The rotation of the spline shaft 233 drives the first lifting rod 231 to move up and down. The sample injection needle 8 is provided at a lower end of the first lifting rod 231. The first lifting rod 231 is a hollow rod with a first liquid tube 234 inside. The sample injection needle 8 is connected to the reagent switching and addition assembly 6 through the first liquid tube 234.

Since the heavier first drive motor 232 is placed on the X-axis slider 212 of the X-axis motion module 21, rather than on the Y-axis slider 221, the spline shaft 233 no longer needs to be mounted on the Y-axis slider 221. Neither the first drive motor 232 nor the spline shaft 233 needs to move with the Y-axis slider 221, thus reducing the load on the Y-axis motion module 22. The rack teeth 2311 on the sidewall of the first lifting rod 231 can move axially along the spline shaft 233, thus not affecting the movement of the Y-axis slider 221. Furthermore, since the first drive motor 232 is relatively large, placing it on the X-axis slider 212 allows for a thinner design for the Y-axis motion module 22. This further reduces the width of the fully automated immunohistochemical stainer, making it more compact, less space-consuming, and easier to be placed within a detection chamber. The sample injection needle 8 is connected to the reagent switching and addition assembly 6 via a first liquid tube 234, allowing for sample injection and drawing the reagent from the small-capacity reagent storage assembly 5 for further sample loading operation. The first liquid tube 234 is build-in, fixed and reliable, and not easy to wobble. This allows the first and second robotic arm assemblies 2 and 3 to operate at correspondingly higher speeds.

Referring to FIGS. 3 and 4, the second Z-axis lifting module 24 includes a second lifting rod 241, a second drive motor (not shown), and a screw transmission assembly (not shown). The second lifting rod 241 is vertically slidably mounted on a Y-axis slider 221 of the Y-axis motion module 22. The second drive motor and the screw transmission assembly are both mounted on a mounting bracket of the Y-axis motion module 22. The second drive motor drives the second lifting rod 241 upward and downward via the screw transmission assembly. The spray assembly 9 is mounted at a lower end of the second lifting rod 241. The second lifting rod 241 is a hollow rod with a second liquid tube 242 inside. The spray assembly 9 is connected to the reagent switching and addition assembly 6 via the second liquid tube 242.

Due to limited space above the X-axis slider 212, it is difficult to accommodate two drive motors. Therefore, the present disclosure adopts a conventional lifting solution, placing the second drive motor and screw transmission assembly on the Y-axis slider 221.

In an alternative embodiment, the sample injection needles 8 on both the first and second robotic arm assemblies 2 and 3 can achieve sampling and sample loading via the same reagent switching and addition assembly 6, and the spray assemblies 9 on both the first and second robotic arm assemblies 2 and 3 can achieve spraying via the same cleaning agent supply assembly 11.

In other alternative embodiments, the cleaning agent supply assembly 11 in the above embodiment can be replaced with another reagent switching and addition assembly 6, that is, the fully automated immunohistochemical stainer includes two reagent switching and addition assemblies 6, where the sample injection needle 8 on the first robotic arm assembly 2 and large-capacity reagent storage assembly 7 are both connected to the first reagent switching and addition assembly 6, while the sample injection needle 8 on the second robotic arm assembly 3 and large-capacity reagent storage assembly 7 are both connected to the second reagent switching and addition assembly 6 (i.e., the reagent switching and addition assembly 6 that replaces the cleaning agent supply assembly 11). In an embodiment, the spray assembly 9 on the first robotic arm assembly 2 and large-capacity reagent storage assembly 7 are both connected to the first reagent switching and addition assembly 6, while the spray assembly 9 on the second robotic arm assembly 3 and large-capacity reagent storage assembly 7 are both connected to the second reagent switching and addition assembly 6. The reagent switching and addition assembly 6 is further configured to draw the cleaning agent from the large-capacity reagent storage assembly 7 and spray it from the spray assembly 9. The first and second robotic arm assemblies 2 and 3 are configured to drive the spray assembly 9 to move so as to spray the incubation module assembly 4. In other words, the reagent switching and addition assembly 6 has the function of adding reagents and also has the function of spraying. The two reagent switching and addition assemblies 6 can realize simultaneous sample loading through the first and second robotic arm assemblies 2 and 3, respectively, or can realize simultaneous spraying operation, thereby improving the operation efficiency.

In other alternative embodiments, two reagent switching and addition assemblies 6 can also be used to respectively realize the sampling and sample loading operations of the first and second robotic arm assemblies 2 and 3, and a cleaning agent supply assembly 11 (which can be arranged at other positions below the workbench 1) can be arranged to realize the spraying operation of the first and second robotic arm assemblies 2 and 3.

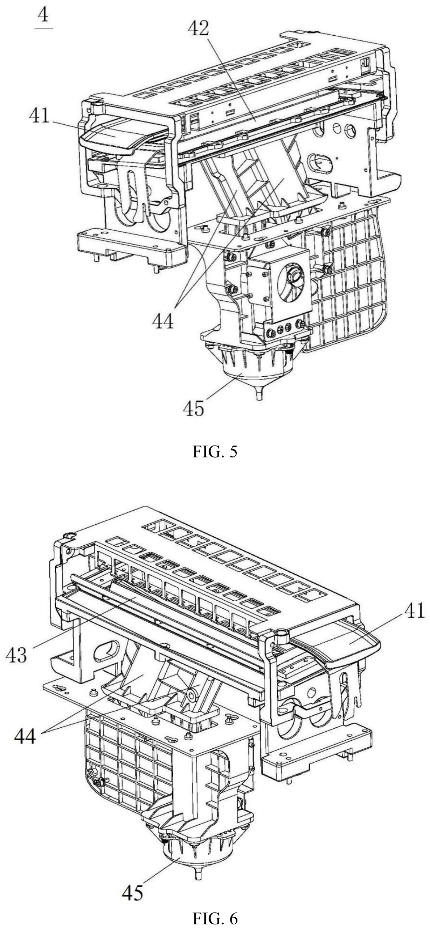

Referring to FIGS. 5 to 7, the incubation module assembly 4 includes a slide tray 41, a heating block 42, a manifold 43, a gas-liquid separator assembly 44, a liquid collection funnel 45, and a waste liquid bottle (not shown). The slide tray 41 is placed above the heating block 42 so that a lower surface of the slide tray directly contacts the heating block 42. The manifold 43 is located below the slide tray 41 and is configured to receive waste liquid. A negative pressure drainage port 431 is provided at a lower end of the manifold 43. The gas-liquid separator assembly 44 is connected to an external negative pressure source, with its upper end connected to the negative pressure drainage port 431 of the manifold 43, and its lower end connected to the liquid collection funnel 45. A lower end of the liquid collection funnel 45 is connected to the waste liquid bottle.

In an alternative embodiment, one or more barrels in the large-capacity reagent storage assembly 7 can serve as waste liquid bottles. For instance, when two of the barrels in the large-capacity reagent storage assembly 7 are used as waste liquid bottles, one of them is used to store toxic waste liquid, and the other is used to store non-toxic waste liquid.

When the slide tray 41 is correspondingly placed in one of the incubation module assemblies 4, the heating block 42 can heat the slide according to actual needs to ensure the temperature required during the staining step. The manifold 43 can collect the waste liquid generated after the reaction is completed, waste liquid enters the gas-liquid separator assembly 44 through the negative pressure drainage port 431 for gas-liquid separation, and then flows into the liquid collection funnel 45 and ultimately enters the waste liquid bottle.

In the present disclosure, the sample injection needle 8 is provided with a liquid level sensor (not shown). When the sample injection needle 8 draws a reagent from the small-capacity reagent storage assembly 5, the sensor is configured to detect the liquid level of the corresponding reagent bottle in the small-capacity reagent storage assembly 5. When the sample injection needle 8 contacts the liquid level, the first Z-axis lifting module 23 continues to move the sample injection needle 8 downward a certain distance to immerse the sample injection needle 8 below the liquid level. Typically, a liquid level sensor is arranged at the bottommost end of the sample injection needle 8 to ensure that the sample injection needle 8 draws the reagent and minimizes the amount of residual reagent in the small-capacity reagent storage assembly 5, thus reducing waste. The liquid level sensor also helps prevent the sample injection needle 8 from being inserted too deeply, preventing excessive contact between the exterior of the sample injection needle 8 and the reagent, thereby facilitating cleaning.

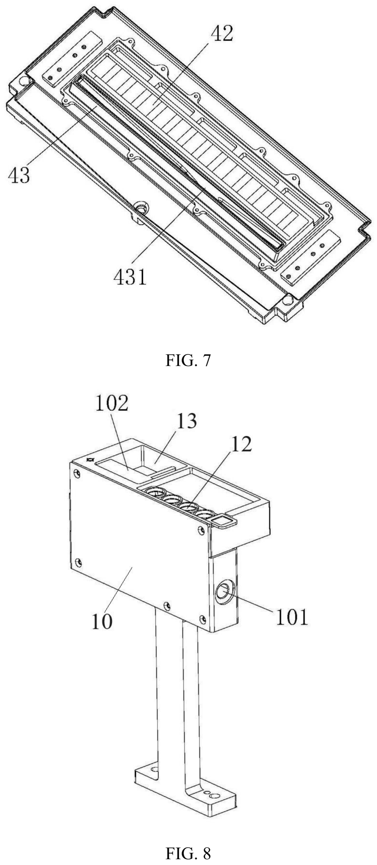

Referring to FIGS. 1 and 8, the workbench 1 is further provided with a cleaning reservoir 10. The sample injection needle 8 or spray assembly 9 is further configured to add a cleaning agent into the cleaning reservoir 10. A liquid extraction port 101 is provided at a bottom of the cleaning reservoir 10. Waste liquid in the cleaning reservoir 10 is pumped into the waste liquid bottle by a liquid extraction component. The sample injection needle 8 extends into the cleaning reservoir 10 to clean residual liquid on the inner and outer walls thereof. Since the sample injection needle 8 needs to be loaded with multiple reagents, to prevent cross-contamination between reagents, the sample injection needle 8 must be cleaned before adding new reagents. The interior of the sample injection needle 8 is typically flushed with cleaning agent drawn by the reagent switching and addition assembly 6, while the exterior of the sample injection needle 8 is primarily cleaned in the cleaning reservoir 10. In an embodiment, the cleaning reservoir 10 includes a cleaning tank 13, within which the sample injection needle 8 is cleaned. In a specific scenario, when the sample injection needle 8 discharges the cleaning agent, a backflow is formed at a specific location within the cleaning tank 13, effectively cleaning the exterior of the sample injection needle 8. The generated waste liquid is then removed from the liquid extraction port 101 at the bottom. Due to the high flow rate of the spray assembly 9, residual liquid is likely to remain at the bottom after spraying. During movement, this residual liquid is prone to dripping downward, potentially onto the incubation module assembly 4 and causing adverse effects. Therefore, in an embodiment, the cleaning reservoir 10 is provided with a negative pressure drainage suction level 102, which is configured to remove residual liquid from the bottom of the spray assembly 9. Furthermore, the cleaning reservoir 10 is also provided with a mixing station 12. The sample injection needle 8 is further configured to draw multiple reagents from the small-capacity reagent storage assembly 5 into the mixing station 12 for mixing, and then add the mixed solution to the incubation module assembly 4. Some reagents with mixed ingredients cannot be stored long-term and must be prepared fresh upon use. The present disclosure provides a mixing station 12, allowing multiple reagents to be added to the mixing station 12. The sample injection needle 8 aspirates or agitates the mixture multiple times until it is uniformly mixed before use. This overcomes the defect of conventional equipment being unable to automatically add some mixed reagents.

The cleaning reservoirs 10 described in the embodiment of the present disclosure include two sets, located on the left and right sides of the workbench 1 respectively, and serving the first and second robotic arm assemblies 2 and 3 respectively.

The implementation principle of the present disclosure is as follows: the small-capacity reagent storage assembly 5 according to the present disclosure can accommodate more expensive staining reagents, while the large-capacity reagent storage assembly 7 can accommodate less expensive but high-consumption buffering agents and cleaning agents. The reagent switching and addition assembly 6 can directly draw the reagent from the large-capacity reagent storage assembly 7 and dispense it to the sample injection needle 8, and can also draw the reagent from the small-capacity reagent storage assembly 5 through the sample injection needle 8 and then inject the sample to the incubation module assembly 4. The cleaning agent supply assembly 11 draws the cleaning agent from the large-capacity reagent storage assembly 7 and sprays it from the spray assembly 9 for cleaning. The first robotic arm assembly 2 and the second robotic arm assembly 3 are both provided with a first Z-axis lifting module 23 and a second Z-axis lifting module 24, which can drive the sample injection needle 8 and the spray assembly 9 to rise and fall independently, realizing fully automated sample loading and cleaning operations. The present disclosure provides two sets of robotic arm assemblies, which can use the intermediate small-capacity reagent storage assembly 5 in a reasonable staggered manner through a scheduling control program, and can perform sample loading and spraying operations on a plurality of incubation module assemblies 4 at the same time, shortening the overall staining time and improving the staining efficiency. The spray assembly 9 provided can continuously or intermittently spray the reagent reaction zone on the slide, effectively preventing insufficient cleaning intensity during reagent capillary replacement, achieving better cleaning effects and improving staining quality. Intermittent spraying can minimize reagent consumption while ensuring effective cleaning. The stacked layout of the functional components results in a compact structure and a small footprint.

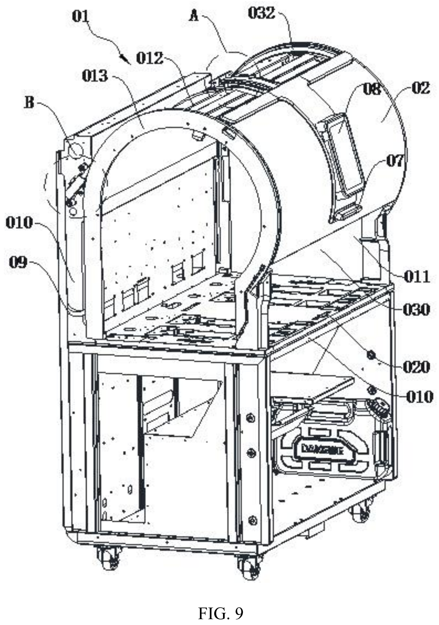

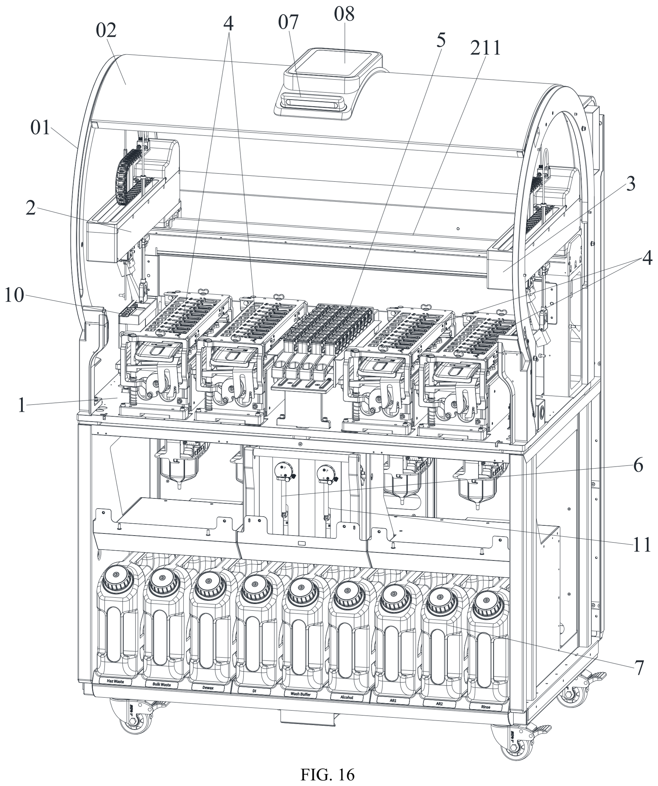

An embodiment of the present disclosure also provides a medical laboratory device, as shown in FIGS. 9 to 15, including a working device 010 and an arc door structure. The working device 010 has an operating platform 020. The arc door structure is mounted on the working device 010. Both end faces of the arc door 02 are sealed. When the arc door is closed, a closed working environment for the working device 010 can be provided. In an embodiment, the medical laboratory device may be an immunohistochemical instrument, a stainer, a cryostat-microtome, or other equipment. For instance, the medical laboratory device may be the fully automated immunohistochemical stainer provided in the aforesaid embodiment of the present disclosure. In other words, the arc door structure provided in the embodiment of the present disclosure can be applied to the fully automated immunohistochemical stainer provided in the aforesaid embodiment of the present disclosure, as shown in FIG. 16.

The following description uses the fully automated immunohistochemical stainer provided in the aforesaid embodiment of the present disclosure as an example of the medical laboratory device. In conjunction with FIGS. 1 to 8, in this embodiment, the working device 010 can be the aggregate of the workbench 1, the first robotic arm assembly 2, the second robotic arm assembly 3, the plurality of incubation module assemblies 4, the small-capacity reagent storage assembly 5, the reagent switching and addition assembly 6, the cleaning agent supply assembly 11, and the large-capacity reagent storage assembly 7 in the fully automated immunohistochemical stainer. In this embodiment, the arc door structure is provided on the workbench 1 (equivalent to the operating platform 020 of the working device 010).

Referring to FIG. 9, the arc door structure includes a support frame 01, which is arranged above an operating space 030 of the fully automated immunohistochemical stainer and defines an operating window 011 in communication with the operating space 030 of the fully automated immunohistochemical stainer. The support frame 01 is provided with an arc guide structure 03 and an arc door 02. The arc door 02 slidably cooperates with the guide structure 03 and has an upward and downward sliding travel along the guide structure 03. Within this travel, the arc door 02 has an upper and lower position. When the arc door 02 is in the upper position, the operating window 011 is opened. When the arc door 02 is in the lower position, it sealably covers the operating window 011.

The support frame 01 includes a support plate 012 and a U-shaped rod 013 located at both ends of the support plate 012. The two ends of the support plate 012 are respectively connected to the two U-shaped rods 013 in a one-to-one correspondence, so that one side of the support frame 01 is sealed and the other side of the support frame 01 forms an operating window 011. When the arc door 02 is in the upper position, the operating window 011 is opened, and the operating personnel can place the experimental equipment, raw materials and samples onto the operating platform 020 (equivalent to the workbench 1 of the fully automated immunohistochemical stainer in the above embodiment). When the preparation work is completed, the arc door 02 is pushed to the lower position to sealably cover the operating window 011. The operating space 030 is sealed to provide a closed environment for the experiment. At this time, the operating personnel operates the working device 010 to conduct the experiment.

Correspondingly, a cable carrier 09 and a display screen 08 provided on the arc door 02 are further included. When the arc door 02 sealably covers the operating window 011, the display screen 08 is facing the operating personnel. The operating personnel inputs instructions on the display screen 08 to operate the working device 010, and the cable carrier 09 is configured to accommodate the electrical circuit connected to the display screen 08. The cable carrier 09 is generally U-shaped, with one end connected to the support frame 01 and the other end connected to the arc door 02 to facilitate wiring and prevent the electrical circuit from being damaged during the process of pushing and pulling the arc door 02.

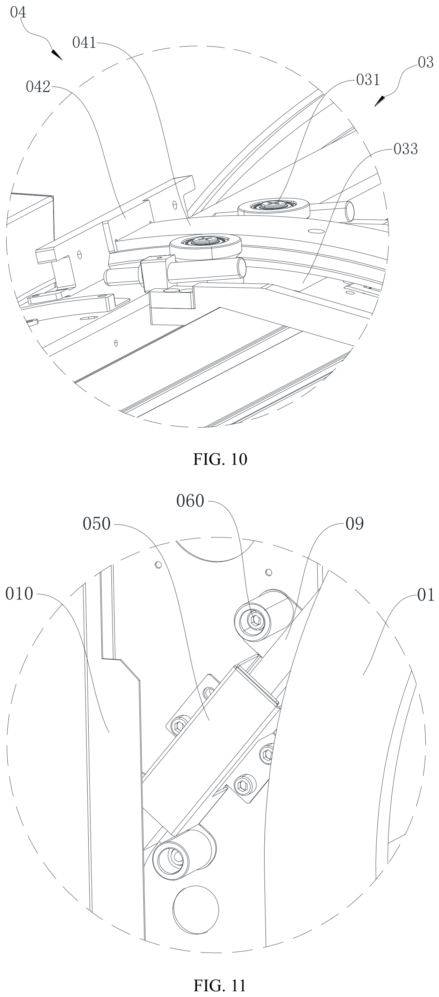

Furthermore, in conjunction with FIG. 11, each side of the work equipment 010 is provided with one limiting sleeve 050 and a set of two limiting columns 060, where the two limiting columns 060 are disposed on either side of the limiting sleeve 050. In this embodiment, two limiting columns 060 are used as a group, and the two limiting columns 060 are diagonally distributed relative to the limiting sleeve 050. The limiting sleeve 050 is connected to the cable carrier 09. By setting the limiting sleeve 050 and the limiting columns 060, the movement trajectory of the cable carrier 09 is constrained.

Referring to FIGS. 9 and 10, the arc door 02 is provided with a corresponding limiting structure 04 that cooperates with the guide structure 03. In an embodiment, the guide structure 03 includes arc grooves 032 disposed at both ends of the support frame 01. The arc door 02 is provided with rollers (not shown) that slide within the arc grooves 032, allowing for the arc door 02 to slide up and down along the arc grooves 032. When the arc door 02 is pushed to slide, the arc door 02 slides along the direction of the arc grooves 032, with the arc grooves 032 constraining its movement trajectory, thereby improving the stability of sliding the arc door 02.

It should be noted that the arc grooves herein can be separately provided on the side where the two U-shaped rods 013 are close to each other, or they can be integrally formed with the U-shaped rods 013, with the arc grooves 032 already provided on the side near the arc door 02.

In another embodiment, the support frame 01 may not include arc grooves 032. Instead, the U-shaped rods and the support plate 012 may be clearance-fit to form a limiting space for limiting the arc door 02, allowing for insertion of the arc door 02, thus providing the same constraining effect as the arc grooves 032.

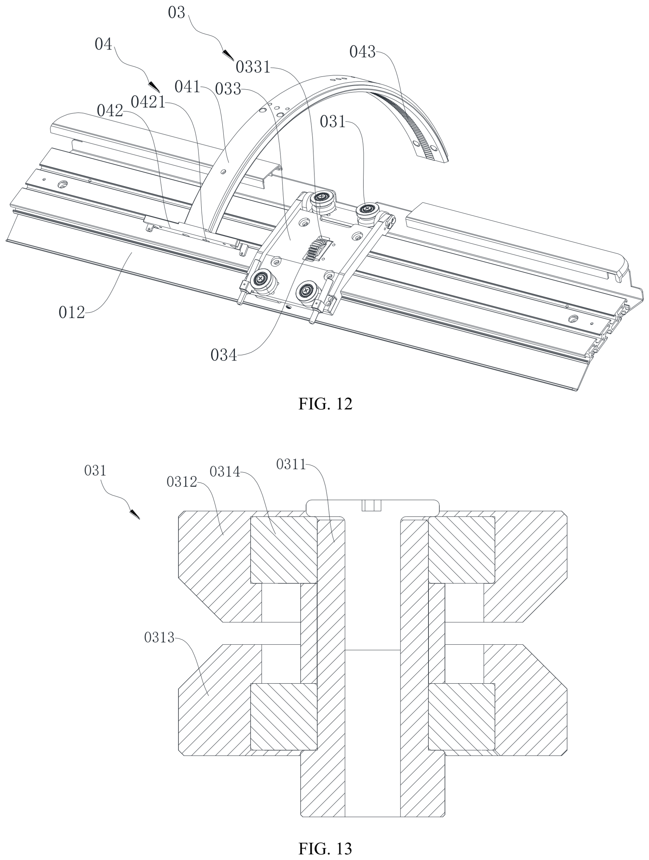

Further, in conjunction with FIG. 12, in other embodiments, the guide structure 03 includes multiple groups of guide wheels, the number of which is preferably two groups, each guide wheel group includes two guide wheels 031. The multiple groups of guide wheels 031 are arranged on the support plate 012 at intervals along the sliding direction of the arc door 02. And the limiting structure 04 includes a curved guide rail 041, which is installed on the arc door 02 and is inserted between the two guide wheels 031 in each guide wheel group and is slidably connected to the guide wheel 031.

When the arc door 02 is pushed, the curved guide rail 041 installed on the arc door 02 will be guided and limited by the group of guide wheels 031, thereby facilitating the pushing of the arc door 02 and improving the stability of sliding the arc door 02.

In this embodiment, the guide structure 03 includes the aforesaid arc groove 032 and guide wheel group, and the limiting structure 04 includes the aforesaid curved guide rail 041. This means that both aforesaid methods of constraining the arc door 02 are simultaneously employed to further enhance the stability of sliding the arc door 02.

Further, in other embodiments, the support plate 012 is provided with a fixed seat 033 configured for mounting the guide wheel group. The fixed seat 033 is provided with a mounting hole 0331, and a gear 034 is rotatably connected to the mounting hole 0331. Correspondingly, a rack 043 capable of meshing with the gear 034 is mounted on a side of the curved guide rail 041 proximal to the fixed seat 033.

The gear 034 is driven by a motor (not shown). When the motor is actuated, the gear 034 drives the rack 043, causing the curved guide rail 041 to slide. The forward and reverse rotation of the motor achieve automatic opening and closing of the arc door 02. Furthermore, a damper (not shown) can be connected to the other side of the gear 034 to prevent sudden force fluctuations during the opening and closing of the arc door 02, thereby balancing the forces acting on the arc door 02. In alternative embodiments, the gear 034 can also be manually driven, for example, by a handle connected to the gear 034, which allows for manual opening and closing of the arc door 02.

When pushing or pulling the rotating door, the curved guide rail 041 slides relative to the fixed seat 033. During the sliding process, the curved guide rail 041 will drive the guide wheel 031 to rotate. And driven by the rack 043, the gear 034 will also rotate. The cooperation between the rack 043 and the gear 034 ensures smooth movement of the arc door 02.

It should be noted that, in other embodiments, the group of guide wheels 031 and the gear 034 can also be installed directly on the support plate 012 to ensure that the arc door 02 moves smoothly.

Referring to FIGS. 12 and 13, the guide wheel 031 includes a rotating shaft 0311 mounted on the support frame 01, an upper roller 0312 and a lower roller 0313 rotatably connected to the rotating shaft 0311 and spaced apart from each other. A chamfer is provided around the sides of the upper roller 0312 and the lower roller 0313 that are close to each other, so that an end of the curved guide rail 041 can be wedged into a gap between the upper roller 0312 and the lower roller 0313. Correspondingly, the curved guide rail 041 is tapered on both sides along its width direction, abutting against the upper roller 0312 and the lower roller 0313.

When the arc door 02 is pushed, the motion trajectory of the curved guide rail 041 is an arc. In other words, the curved guide rail 041 makes a circular movement relative to the support frame 01. Due to the thickness of the curved guide rail 041, the linear speeds of the inner and outer sides of the curved guide rail 041 are inconsistent with each other. And the curved guide rail 041 is slidably connected to the upper roller 0312 and the lower roller 0313, respectively. The upper roller 0312 and the lower roller 0313 rotate independently, thereby preventing the curved guide rail 041 from causing greater damage to the guide wheel 031 due to the inconsistent linear speeds of the inner and outer sides when sliding.

Furthermore, rolling bearings 0314 are provided in the upper roller 0312 and the lower roller 0313. Rolling bearings 0314 are sleeved on the rotating shaft 0311 to improve the smoothness of rotation of the upper roller 0312 and the lower roller 0313 relative to the rotating shaft 0311, thereby reducing the friction of the curved guide rail 041 with the upper roller 0312 and the lower roller 0313 when sliding, and enhancing the protection for the guide wheel 031.

Referring to FIG. 9, in order to facilitate the operating personnel to push and pull the arc door 02, a push handle 07 is mounted on a side of the arc door 02 that faces away from the curved guide rail 041.

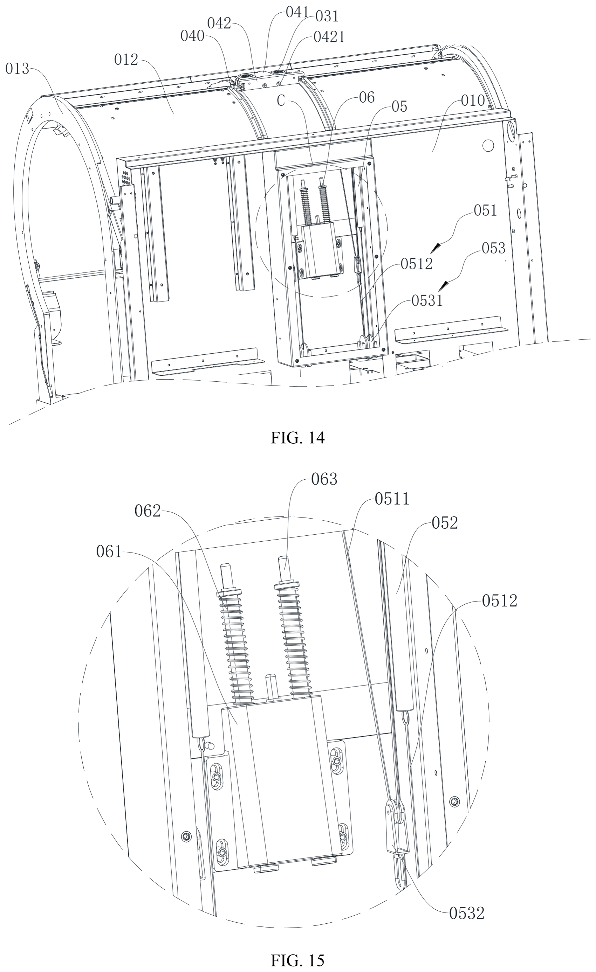

Further, referring to FIGS. 14 and 15, an assisting member 05 is further included, one end of which is elastic and connected to the working device 010 or the support frame 01. In this embodiment, the elastic end of the assisting member is connected to the working device 010. In other embodiments, the elastic end of the assisting member 05 can also be connected to the support frame 01. The other end of the assisting member 05 is lap-jointed to the support frame 01 and connected to the arc door 02, and is configured to assist the arc door 02 in sliding from the lower position to the upper position.

In an embodiment, the assisting member 05 includes a traction cable 051 and a first resilient element 052. The number of the traction cable 051 and the first resilient element 052 can be one or more. In this embodiment, the traction cable 051 and the first resilient element 052 are both set to two groups. The two groups of traction cables 051 are arranged in a one-to-one correspondence with the two groups of first resilient elements 052. The first resilient element 052 is preferably a spring. The spring is installed on the working device 010. One end of the traction cable 051 is connected to the first resilient element 052, and the other end of the traction cable 051 is connected to the arc door 02.

Taking the door opening action as an example, when the arc door 02 is in the lower position, the first resilient element 052 at this time is in a stretched state, applying a pulling force to the arc door 02 to provide assistance to the operating personnel when pushing the arc door 02 from the lower position to the upper position. And it should be noted that during the process of the arc door 02 being pushed, the first resilient element 052 at this time gradually shrinks back to its initial state, and the pulling force applied to the arc door 02 is gradually reduced to adapt to the different position states of the arc door 02 (when the arc door 02 is in different positions, the resistances encountered when pushing and pulling the arc door 02 are different; the resistance is the largest in the lower position, and the resistance is the smallest in the upper position), so that the entire pushing and pulling process is stable and smooth.

It should be noted that, in other embodiments, it is also possible to merely provide a first resilient element 052. The first resilient element 052 is provided in an arc shape, one end of which is connected to the arc door 02 and the other end is connected to the working device 010, thereby achieving the same assisting effect.

And in this embodiment, in order to further improve the stability of sliding the arc door 02, the traction cable 051 includes a first traction cable 0511 and a second traction cable 0512. Correspondingly, a pulley assembly 053 is provided on the working device 010, including a fixed pulley 0531 and a movable pulley 0532. The first traction cable 0511 is connected to the movable pulley 0532, one end of the first traction cable 0511 is connected to the arc door 02 and the other end of the first traction cable 0511 is connected to the working device 010. The second traction cable 0512 is connected to the fixed pulley 0531, one end of the second traction cable 0512 is connected to the first resilient element 052 and the other end of the second traction cable 0512 is connected to the movable pulley 0532.

Through the arrangement of the pulley assembly 053 and the traction cable 051, the tension exerted by the resilient element on the arc door 02 can be better transmitted to the arc door 02.

Furthermore, a supporting piece 040 is installed on the support plate 012. The supporting piece 040 is arranged in an arc shape and is configured to support the first traction cable 0511 to prevent the first traction cable 0511 from being placed directly on the support plate 012 during the process of pushing and pulling the arc door 02 and scratching the support plate 012 after long-term pushing and pulling of the arc door 02.

Referring to FIGS. 14 and 15, a buffer member 06 is further included. The buffer member 06 is mounted on the working device 010 and is located on a side of the support frame 01 facing away from the operating space 030. The buffer member 06 can abut against the arc door 02 when it is in the upper position. In an embodiment, the buffer member 06 includes a mounting seat 061 and a second resilient element 062. The mounting seat 061 is mounted on the support frame 01. One end of the second resilient element 062 is connected to the mounting seat 061, and the other end of the second resilient element 062 is configured to abut against the arc door 02 when it is in the upper position.

When the arc door 02 moves from the lower position to the upper position, the arc door 02 will contact and compress the second resilient element 062. The second resilient element 062 balances the gravity, so that the arc door 02 moves smoothly when its center of gravity moves downward.

Further, the buffer member 06 further includes a buffer column 063 mounted on the mounting seat 061 to constrain the second resilient element 062 and prevent the second resilient element 062 from moving around during compression. The number of the buffer column 063 and the second resilient element 062 can be one or more. In this embodiment, two buffer columns 063 and two second resilient elements 062 are provided. The two buffer columns 063 are mounted on opposite sides of the mounting seat 061 and are arranged in a one-to-one correspondence with the two second resilient elements 062

The second resilient element 062 is sleeved over the buffer column 063, and allows for the end of the buffer column 063 to extend therethrough. And the arc door 02 can be provided with a connection plate 042 on the side that abuts against the second resilient element 062. The connection plate 042 is connected to the side of the curved guide rail 041 away from the arc door 02. The connection plate 042 is provided with an insertion hole 0421 that cooperates with the buffer column 063. The aperture of the insertion hole 0421 is larger than the outer diameter of the buffer column 063 to facilitate the insertion of the buffer column 063.

Before the connection plate 042 abuts against the second resilient element 062, the buffer column 063 is inserted into the insertion hole 0421 to constrain the movement of the connection plate 042. The buffer column 063 provides a buffering effect when pushing the arc door 02 to fall backward, avoiding impact damage and reducing the noise generated when opening the door, thereby ensuring the stability of the arc door 02 when it moves to the upper position.

The implementation principle of the embodiment of the present disclosure is as follows: when the push handle 07 is held to push the rotating door, the curved guide rail 041 located on a side of the arc door 02 will be constrained by the guide wheel 031, and both ends of the arc door 02 will be constrained by the arc groove 032. In the process of pushing the rotating door, the first resilient element 052 exerts a pulling force on the arc door 02, making the door opening action more stable and smooth. When the arc door 02 reaches the upper position from the lower position, the second resilient element 062 gradually contracts to filter out the impact formed during the door opening action. The arc door 02 ultimately rests on the support plate 012. The entire arrangement features a compact footprint and ensures smooth and stable pushing and pulling operation.

The above are all preferred embodiments of the present disclosure, and are not intended to limit the scope of protection of the present disclosure. Therefore, any equivalent changes made based on the structure, shape, and principle of the present disclosure should be included in the scope of protection of the present disclosure.

### Industrial Applicability

The fully automated immunohistochemical stainers provided in the above embodiments of the present disclosure have high staining efficiency. The arc door structure provided in the above embodiments is more convenient to use and takes up less space. The medical laboratory device provided in the above embodiments is easy to use and takes up less space.

## Claims

1. A fully automated immunohistochemical stainer, comprising a workbench, a first robotic arm assembly, a second robotic arm assembly, a plurality of incubation module assemblies, a small-capacity reagent storage assembly, a reagent switching and addition assembly, a cleaning agent supply assembly, and a large-capacity reagent storage assembly, wherein the plurality of incubation module assemblies are arranged in parallel arrays on the workbench, the small-capacity reagent storage assembly is arranged in the middle of the plurality of incubation module assemblies, the reagent switching and addition assembly, the cleaning agent supply assembly, and the large-capacity reagent storage assembly are arranged below the workbench; each of the first robotic arm assembly and the second robotic arm assembly comprises an X-axis motion module, a Y-axis motion module, a first Z-axis lifting module, and a second Z-axis lifting module, the first Z-axis lifting module and the second Z-axis lifting module are arranged on a Y-axis slider of the Y-axis motion module, the first Z-axis lifting module is provided with a sample injection needle, the second Z-axis lifting module is provided with a spray assembly; the sample injection needle and the large-capacity reagent storage assembly are both connected to the reagent switching and addition assembly; the reagent switching and addition assembly is configured to draw a reagent from the large-capacity reagent storage assembly and dispense a sample from the sample injection needle; the reagent switching and addition assembly is further configured to draw a reagent from the small-capacity reagent storage assembly through the sample injection needle, and then dispense a sample from the sample injection needle; the spray assembly and the large-capacity reagent storage assembly are both connected to the cleaning agent supply assembly, and the cleaning agent supply assembly is configured to draw cleaning agent from the large-capacity reagent storage assembly and spray the cleaning agent from the spray assembly; the first robotic arm assembly and the second robotic arm assembly are configured to move the sample injection needle to add a reagent to the incubation module assembly and to draw a reagent from the small-capacity reagent storage assembly; the first robotic arm assembly and second robotic arm assembly are further configured to move the spray assembly to perform a spraying operation within the incubation module assembly.

2. The fully automated immunohistochemical stainer according to claim 1, wherein the X-axis motion module comprises an X-axis guide rail, the first robotic arm assembly and the second robotic arm assembly are spaced apart along an X-axis direction and share the X-axis guide rail, the first robotic arm assembly is configured to perform sample loading and cleaning operations on the incubation module assembly located on one side of the small-capacity reagent storage assembly in the X-axis direction, and the second robotic arm assembly is configured to perform sample loading and cleaning operations on the incubation module assembly located on another side of the small-capacity reagent storage assembly in the X-axis direction.

3. The fully automated immunohistochemical stainer according to any one of claims 1 to 2, wherein the first Z-axis lifting module comprises a first lifting rod, a first drive motor and a spline shaft; the first lifting rod is vertically slidably arranged on the Y-axis slider of the Y-axis motion module; the spline shaft is parallel to the Y-axis; a side wall of the first lifting rod is provided with rack teeth meshing with the spline shaft; the first drive motor is arranged on an X-axis slider of the X-axis motion module, and is configured to drive the spline shaft to rotate; the spline shaft is configured to drive the first lifting rod to move up and down by rotating; the sample injection needle is arranged at a lower end of the first lifting rod; the first lifting rod is a hollow rod with a first liquid tube inside; and the sample injection needle is connected to the reagent switching and addition assembly through the first liquid tube.

4. The fully automated immunohistochemical stainer according to claim 3, wherein the second Z-axis lifting module comprises a second lifting rod, a second drive motor and a screw transmission assembly; the second lifting rod is vertically slidably arranged on the Y-axis slider of the Y-axis motion module; the second drive motor and the screw transmission assembly are both arranged on a mounting bracket of the Y-axis motion module; the second drive motor drives the second lifting rod to move up and down through the screw transmission assembly; the spray assembly is arranged at a lower end of the second lifting rod; the second lifting rod is a hollow rod with a second liquid tube inside; and the spray assembly is connected to the reagent switching and addition assembly through the second liquid tube.

5. The fully automated immunohistochemical stainer according to claim 1, wherein the incubation module assembly comprises a slide tray, a heating block, a manifold, a gas-liquid separator assembly, and a liquid collection funnel; the slide tray is placed above the heating block so that a lower surface of the slide tray is in direct contact with the heating block; the manifold is located below the slide tray and is configured to receive waste liquid; a lower end of the manifold is provided with a negative pressure drainage port; the gas-liquid separator assembly is connected to an external negative pressure source; an upper end of the gas-liquid separator assembly is connected to the negative pressure drainage port of the manifold; and a lower end of the gas-liquid separator assembly is connected to the liquid collection funnel.

6. The fully automated immunohistochemical stainer according to claim 1, wherein the sample injection needle is provided with a liquid level sensor; the liquid level sensor is configured to detect the liquid level of a corresponding reagent bottle in the small-capacity reagent storage assembly in response to the sample injection needle drawing the reagent from the small-capacity reagent storage assembly; and in response to the sample injection needle contacting the liquid surface, the first Z-axis lifting module is configured to continue to move the sample injection needle downward a certain distance to immerse the sample injection needle below the liquid surface.

7. The fully automated immunohistochemical stainer according to claim 6, wherein the workbench is further provided with a cleaning reservoir; the sample injection needle or the spray assembly is further configured to add cleaning agent into the cleaning reservoir; a bottom of the cleaning reservoir is provided with a liquid extraction port; the liquid extraction component is configured to pump waste liquid from the cleaning reservoir into a waste liquid bottle; and the sample injection needle is configured to extend into the cleaning reservoir to perform self-cleaning.

8. The fully automated immunohistochemical stainer according to claim 7, further comprising a mixing station, wherein the sample injection needle is further configured to draw multiple reagents from the small-capacity reagent storage assembly into the mixing station for mixing, and then add the mixed solution to the incubation module assembly.

9. The fully automated immunohistochemical stainer according to any one of claims 1 to 8, further comprising an arc door structure disposed on the workbench, the arc door structure comprises:
a support frame, wherein the support frame is provided with an operating window in communication with an operating space of the fully automated immunohistochemical stainer, and the support frame is provided with a guide structure; and
an arc door slidably engaged with the guide structure, wherein during sliding motion along the guide structure, the arc door has an upper position in which the arc door opens the operating window and a lower position in which the arc door sealably covers the operating window.

10. The fully automated immunohistochemical stainer according to claim 9, wherein the guide structure comprises a plurality of groups of guide wheels, each group comprises two guide wheels, and the plurality of groups of guide wheels are spaced apart on the support frame along a sliding direction of the arc door;
the arc door is provided with a limiting structure that cooperates with the guide structure, the limiting structure comprises a curved guide rail mounted on the arc door, the curved guide rail is inserted between the two guide wheels of each of the plurality of groups of guide wheels and is slidably connected to the guide wheels.

11. The fully automated immunohistochemical stainer according to claim 10, wherein the guide wheel comprises a rotating shaft mounted on the support frame, an upper roller and a lower roller rotatably connected to the rotating shaft and spaced apart from each other, wherein an end of the curved guide rail is wedged between and abuts against the upper roller and the lower roller; and/or
the support frame is provided with a fixed seat configured to mount the groups of guide wheels, the fixed seat is provided with a mounting hole, and a gear is rotatably connected within the mounting hole, the gear is driven by a motor; a rack configured to mesh with the gear is mounted on a side of the curved guide rail proximal to the fixed seat.

12. The fully automated immunohistochemical stainer according to any one of claims 9 to 11, wherein the arc door structure further comprises an assisting member, one end of the assisting member is elastic and is configured to connect to the workbench or the support frame, and another end of the assisting member is connected to the arc door and is configured to assist the arc door in sliding from the lower position to the upper position.

13. The fully automated immunohistochemical stainer according to claim 12, wherein the assisting member comprises a traction cable and a first resilient element, the first resilient element is mounted on the workbench, one end of the traction cable is connected to the first resilient element, and another end of the traction cable is connected to the arc door.

14. A fully automated immunohistochemical stainer, comprising a workbench, a first robotic arm assembly, a second robotic arm assembly, a plurality of incubation module assemblies, a small-capacity reagent storage assembly, reagent switching and addition assembly, and a large-capacity reagent storage assembly, wherein the plurality of incubation module assemblies are arranged on the workbench, and the small-capacity reagent storage assembly is arranged between the plurality of incubation module assemblies; the first robotic arm assembly and the second robotic arm assembly are both provided with a sample injection needle; the sample injection needle and the large-capacity reagent storage assembly are both connected to the reagent switching and addition assembly; the reagent switching and addition assembly is configured to draw a reagent from the large-capacity reagent storage assembly and dispense a sample from the sample injection needle; the reagent switching and addition assembly is further configured to draw a reagent from the small-capacity reagent storage assembly via the sample injection needle and dispense a sample from the sample injection needle; and the first robotic arm assembly and the second robotic arm assembly are configured to move the sample injection needle to add a reagent to the incubation module assembly and to draw a reagent from the small-capacity reagent storage assembly.

15. The fully automated immunohistochemical stainer according to claim 14, further comprising a cleaning agent supply assembly, wherein the first robotic arm assembly and the second robotic arm assembly are both provided with a spray assembly; the spray assembly and the large-capacity reagent storage assembly are both connected to the cleaning agent supply assembly; the cleaning agent supply assembly is configured to draw a cleaning agent from the large-capacity reagent storage assembly and spray the cleaning agent from the spray assembly; and the first robotic arm assembly and the second robotic arm assembly are further configured to move the spray assembly to spray the incubation module assembly.

16. The fully automated immunohistochemical stainer according to claim 15, wherein the fully automated immunohistochemical stainer comprises two reagent switching and addition assemblies, and the reagent switching and addition assembly is one of two reagent switching and addition assemblies, the sample injection needle on the first robotic arm assembly and the large-capacity reagent storage assembly are both connected to a first one of the reagent switching and addition assemblies, and the sample injection needle on the second robotic arm assembly and the large-capacity reagent storage assembly are both connected to a second one of the reagent switching and addition assemblies.

17. The fully automated immunohistochemical stainer according to claim 15 or 16, wherein each of the first robotic arm assembly and the second robotic arm assembly comprises an X-axis motion module, a Y-axis motion module, a first Z-axis lifting module, and a second Z-axis lifting module, wherein the first Z-axis lifting module and the second Z-axis lifting module are disposed on a Y-axis slider of the Y-axis motion module, the first Z-axis lifting module is provided with the sample injection needle, and the second Z-axis lifting module is provided with the spray assembly.

18. The fully automated immunohistochemical stainer according to claim 17, wherein the first Z-axis lifting module comprises a first lifting rod, a first drive motor, and a spline shaft; the first lifting rod is vertically slidably arranged on the Y-axis slider of the Y-axis motion module; the spline shaft is parallel to the Y-axis; a side wall of the first lifting rod is provided with rack teeth meshing with the spline shaft; the first drive motor is arranged on an X-axis slider of the X-axis motion module, and is configured to drive the spline shaft to rotate; the spline shaft is configured to drive the first lifting rod to move up and down by rotating; the sample injection needle is arranged at a lower end of the first lifting rod; the first lifting rod is a hollow rod with a first liquid tube inside; and the sample injection needle is connected to the reagent switching and addition assembly through the first liquid tube.

19. An arc door structure, comprising:
a support frame, wherein the support frame is provided with an operating window and is disposed above an operating space of a working device, and the support frame is provided with a guide structure; and
an arc door, wherein the arc door is provided with a limiting structure cooperating with the guide structure and is configured to slide up and down along the guide structure, wherein during sliding motion along the guide structure, the arc door has an upper position in which the arc door opens the operating window and a lower position in which the arc door sealably covers the operating window.

20. A medical laboratory device, comprising a working device and the arc door structure according to claim 19, wherein the arc door structure is installed on the working device.
